# EUROPEAN PATENT SPECIFICATION

(11) **EP 0 873 186 B1**
(45) Date of publication and mention of the grant of the patent: **07.05.2003**
(21) Application number: 96929586.4
(22) Date of filing: 23.08.1996
(51) Int. Cl.: B01J 20/24, C02F 1/28, E02B 15/04

(54) **SORBENTS COMPRISING SPHAGNUM**
SORBENTIEN MIT SPHAGNUM
ABSORBANTS COMPRENANT UNE SPHAIGNE

(30) Priority: 25.08.1995 NO 953346
(43) Date of publication of application: 28.10.1998
(73) Proprietor: Sphagnum A/S, 5037 Solheimsviken (NO)
(72) Inventor: BONES, Oyvind, N-5037 Solheimsviken (NO)
(74) Representative: Wiklund, Ingrid Helena
(86) International application number: NO9600210
(87) International publication number: WO97007883

(56) References cited:
- EP-A- 0 643 955
- US-A- 4 676 871
- DIALOG INFORMATION SERVICES, File 103, Energy SciTec, Dialog Accession No. 03154736/5, FI-91-003176; EDB-91-092172, HAGEN, T.S. et al., "Evaluation of Carex Peat, Sphagnum Moss Peat and Sphagnum Top Mo as Oil Sorbents"; 1990, p. 290-299 (511 p).
- WATER, AIR AND SOIL POLLUTION, Volume 45, 1989, G.N. MATHAVAN et al., "Use of Peat in the Treatment of Oily Waters", pages 17-26.
- PROCEEDINGS OF THE 42ND INDUSTRIAL WASTE CONFERENCE, 12, 13, 14 May 1987, PURDUE UNIVERSITY WEST LAFAYETTE, INDIANA, LEWIS PUBLISHERS, INC., T. VIRARAGHAVAN et al., "Use of Peat in the Treatment of Oil-in-Water Emulsions", pages 465-474.
- DIALOG INFORMATION SERVICES, File 103, Energy SciTec, Dialog Accession No. 1790078/5, NORD-86-007208; ERA-11-037290; EDB-86-113795, NYROENEN, T. et al., "Some Applications of the Use of Peat in Environmental Problems"; 1985, p. 395-400.

## Description

The present invention relates to a sorption medium comprising the plant family Sphagnum. More specifically the invention relates to sphagnum plants for collecting pollutants consisting substantially of hydrophobic compounds, such as oil, in that the sphagnum plant absorbs the pollutant.

The pollution of water, oceans and land zones with oillike compounds to-day represents a large environmental problem. Such pollutants are often the result, of ship wrecks, uncontrolled blow-outs from oil bore rigs, together with effluent from boats, factories and the like.

Hydrophobic (non-polar) compounds, such as oil, are non-soluble in hydrophillic (polar) solvents, such as water and therefore entail a problem for the environment since they are decomposed more slowly than water-soluble compounds. Another problem with hydrophobic compounds is that such compounds are often very adhesive.

Thus, an oil spill can cause damaging effects either directly as a result of chemical toxicity, and/or indirectly by organisms, perhaps foodstuffs /substrates becoming covered with oil, and central functions like photosynthesis, food absorption, thermoregulation or natural behaviour are obstructed.

The term water in the application designates any water-containing liquid, such as sea water, fresh water in lakes and rivers and the like.

By the term hydrophobic compounds is meant any compound which has a preference for dissolving in a non-polar solvent in preference to dissolving in water. Examples of such compounds are aliphatic hydrocarbons, fatty acids, fatty esters and aromatic compounds and the like.

A sub-group of hydrophobic compounds are oils. A series of dissimilar types, having dissimilar chemical compositions, exist. Crude oil is an example of an oil and consists of compounds like hydrocarbons with straight, branched and cyclic chains, together with components like nitrogen, sulphur and nickel.

The term oil will be used in the continuation as a collective term for designating all types of oil, such as crude oil, refined products, such as fuel and fuel oils and also animal and vegetable oils.

Oils are, by virtue of their chemical nature, that is to say their non-polar, hydrophobic character, not mixable with water. Solutions which include a combination of oil and water will exist therefore in various forms/phases.

Such a form is when the oil is phase-separated from the water, and there is formed a two phase system in thermodynamic equilibrium, where the oil which has the lowest specific gravity will float on top of the water. This leads to the oil spreading itself over large surfaces of water.

In such a phase-separated form, the oil can also exist as a phase below the water if the oil is adhered to a solid base. Such a situation exists in nature in for example an oil spill at the water's edge. The oil is adhered to bare rock faces and the like, and at high tide the oil will, even with a lower specific gravity than water, remain stuck to the base and lie as an separate phase below the water phase.

When it blows the wind will whip up the surface of the water, and when this contains oil it will be able to form a dispersion. Thermodynamically this is a situation out of equilibrium, but which is maintained because the system is supplied energy (wind). However, the most stable condition for a mixture of oil and water is when the oil and the water are separated into two phases. A dispersion will however be able to be converted into an emulsion, which is far more stable, in that in the boundary layers between the oil and the water there is absorbed a small quantity of a surface-tension reducing substance (surface active compound) which forms a film between the oil molecules and the water molecules which prevents their coalescence (aggregation) on collision. The process back to separating into two phases can thus be very slow, and a series of emulsions will be storage-stable, and often energy has to be supplied in order to break the emulsion. Mixtures of oil and water will therefore often exist in such a condition, accordingly as either an oil-in-water emulsion, or as a water-in-oil emulsion, depending upon which components and the mixture proportions which exist, plus temperature and the like.

It shall also be observed that oil viewed chemically is a heterogeneously composed group, consisting of components of dissimilar character, and each component has its characteristic balance between hydrophobic and hydrophillic properties. The individual chemical compounds in such an oil mixture will therefore have dissimilar miscibility with water. Therefore, in a water/oil mixture there will always be some dissolved oil in the water phase, and likewise some dissolved water in the oil phase. The equilibria which apply here are determined by which components and mixture proportions exist, together with a series of other parameters.

A series of products exist on the market for clearing pollution problems as a result of oil spills. Known techniques can mainly be divided into three main fields on the basis of which principles are used during the clearing.

A series of dissimilar solutions exist for clearing oil by using physical separation techniques. There can be briefly mentioned here the use of oil booms for concentrating the oil in certain regions, so that thereafter the oil can be pumped away from the pollution location.

A second technique employs chemical means for breaking down the oil. The oil consists as known of substantially hydrophobic compounds, and where the hydrophobic compounds interact strongly, that is to say they associate tightly together (aggregate) because of their common water-repelling properties. The entropy forces will guide the hydrophobic compounds together by excluding water, that is to say reduce the interaction between water and oil molecules. A series of chemical detergents have therefore been employed to dissolve the oil structure, and thus make the oil more water-soluble. Such surface active agents are often of amphifilic character and forms a film between the molecules of water and the hydrophobic molecules, and have a corresponding action mechanism like detergent washing means. Water-soluble micelles are formed, with a nucleus of oil and with a surface/membrane of detergent. COREXIT is an example of such a compound which is used to-day for clearing oil spills.

Using chemical agents to break down the interaction between the various oil molecules is however not without environmental problems, since most chemicals which are used are toxic. By using detergents the oil is not removed from the water, but the oil structure is dissolved and the oil becomes soluble in the water. Viewed in this manner there are only problems connected with the oil's adhesiveness which is removed by this technique.

The third technique which is used for removing the problems in connection with an oil spill is sorption. Sorption is a collective term, and designates both adsorption and absorption. By adsorption the materials are bound on the absorbent, while in absorption the materials are drawn into the structure of the absorbent. This difference is completely essential for understanding the present invention.

The sorption means known to-day are largely of the adsorption means type, that is to say that the pollution which is to be removed adheres to the adsorption medium. Large surface area, for each particle, relative to volume is therefore crucial. This involves the substances being ground/cut up into small particles, since smaller particle diameters give a higher proportional surface/volume. A series of such adsorbents exist to-day on the market, such as pine bark, saw mould and peat.

It is known from Mathavan, G.N. and Viraraghavan, T., "Water, Air and Soil Pollution", Vol. 45, 1989, page 17-26 and Viraraghavan, T. and Mathavan,G.N., 42nd. Purdue University "Industrial Waste Conference Proceedings", that peat can be used for adsorption of oil from oil-containing water and from oil-in-water emulsions respectively.

Dialog Information Services, File 103, Energy SciTec, Dialog Accession No. 0315436/5, FI-91-003176; EDB-91-092172, Hagen, T.S. et al: "Evaluation of carex peat, sphagnum moss peat, and sphagnum top mo as oil sorbents"; 1990, p 290-299 (511 p), discloses a sorption medium comprising the plant family Sphagnum for sorption of oil.

In EP-A1-0 643 955 there is described an absorbent product containing sphagnum moss, as well as a method for manufaturing a highly absorbent structure.

US 4,676,871 disloses an absorbent, dried laid board comprising peat moss and a method of producing such a board.

Hagen, T.S., et al, Natural Resources Research Institute, University of Minnesota, Duluth describes various preparations which function as oil sorption means. It is observed that these tests are only conducted on oil mixtures, and not mixtures of oil and water. Various plants are tested, but common to them is that the plants are ground up/cut up so as to give small particles (sieved through a strainer having a 2 mm. pore size). This is done exclusively in order to increase the adsorptive ability (proportional surface/volume increases).

The grinding or cutting up of the adsorptive means so that the capacity and the effectiveness of the adsorption is increased, involves however significant problems in the use of such compounds for clearing oil spills. Wind will lead to the small particles being blown away from the pollution location, and if it is not calm it will be difficult to get a good contact between the particles and the oil spill. In order to collect the material (oil and particles) again pumping must be used. The result is that the volume which is pumped up is increased as a result of it now including also the adsorption material in addition to the oil.

.The present invention aims to solve these problems by using materials which have the ability to absorb hydrophobic compounds, such as oil, plus that the material which is used can be readily collected again.

It is known from the publication of Hagan, above, that the plant family Sphagnum has oil absorbing properties in various oil mixtures. In the article as pointed out above however the focus is on the adsorption properties of the plant, and in order to increase the surface therefore, the plant is ground with rotating knives into small particles. With that the absorption properties of the plant are reduced at the expense of an increase in the adsorptive properties. That the plant can absorb oil from a mixture of oil and water is not described.

The present invention is characterised by the Sphagnum plant being partially dried, and largely whole, that is to say with the plant structure largely intact.

The present invention therefore relates to a sorption material treated in such a manner that the absorption properties are taken care of. In this manner, there are achieved, surprisingly, a series of improvements relative to the sorption materials which exist to-day.

The following Examples and Figures will illustrate certain embodiments according to the present invention, and also what results are obtained by developing and testing the material.

Fig. 1 shows a twig leaf seen from above from a plant of the Sphagnum family.

Fig. 2 shows a cross-section of a twig leaf.

Sphagnum, also called peat moss, is a plant family which grows largely on all poor soil bogs, and to-day about 40 kinds belong to this family. The plant forms a tight coherent carpet, and it grows to a length of about 1-5 cm for the year. The plant grows at the apex (the top), and simultaneously the plant dies at the other end (below) . Therefore it is only the 5-10 uppermost centimetres of the plant which are living and conduct photosynthesis. The lowermost portion of the plant is dead, and becomes little by little converted into peat. The decomposition process often starts about 15 cm. under the top, that is to say that in addition to the living portion of the plant (5-10 cm.) there is also an additional portion of the plant which includes whole, but dead cells.

By virtue of the trivial name which this plant family has got, namely peat moss, it is often mistakenly taken to be peat. Only that material which is in the process of decomposing is however peat, and the material according to the invention which consists of the uppermost about 15 cm. of the plant is therefore not peat. There is therefore a fundamental difference in the material which is taken from the uppermost portions (about 15 cm.) of the plant which consist of whole, absorbing cells, and the material which is taken from the lowermost portions (dead cells having a decomposed cell structure, and which therefore do not absorb). The material of the present invention must therefore not be confused with various peat materials which exist.

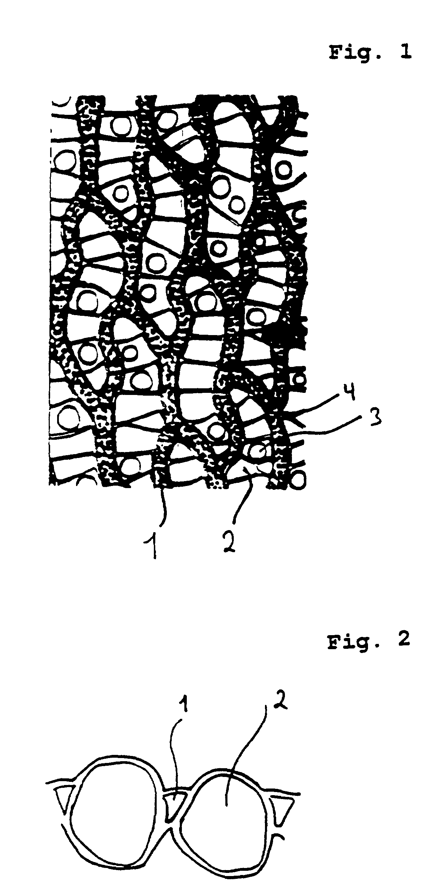

The cell structure of the Sphagnum plant family is characterised in that it consists of two types of cells. Firstly the plant has its chlorophyll cells which perform photosynthesis. These chlorophyll cells lie squeezed between the much larger, empty and metabolically largely "dead" hyaline cells. The cell pattern is seen in Figs. 1 and 2 where the chlorophyll cells are indicated as (1) and the hyaline cells are indicated as (2). The hyaline cells are provided with pores (3) and reinforcing strips (4) . The Sphagnum plant does not have a root system, and reception of nutrients takes place through very small pores on the whole surface of the plant. The relatively large hyaline cells function as storage reservoirs, and can for example hold amounts of water corresponding to about 20 times the plant's own dry weight. The water can be removed by evaporation, and the water in the hyaline cells is replaced by air. The hyaline cell wall is as indicated above provided with reinforcing strips, and the cell structure is maintained also after the water is removed. Dried sphagnum plants will therefore maintain the cell structure, and also the absorbing ability.

The hyaline cells have as mentioned pores, and carry out an active replacement of ions with the surroundings. The photosynthesis in the chlorophyll cells produces H⁺ ions from the decomposition of water, and by an interaction between hyaline cells and chlorophyll cells these end up in the hyaline cells where they can be replaced with other positive ions from the surroundings, such as Na⁺, Mg²⁺, Ca²⁺, K⁺, and Zn²⁺.

This replacement effect continues to function even after the photosynthesis of the plant has stopped.

It is the ability of the sphagnum plant to absorb liquids in the hyaline cells which is utilised in connection with the present invention.

### Example 1 - Harvesting and drying of Sphagnum

Harvesting of the sphagnum plant takes place by tearing the plant from the bog. The portion of the plant which has not decayed will follow. That is to say, the "peat portion" of the plant remaining in the bog, and that which is collected consisting of the living portion (5-10 cm.) and dead portion (the remainder down to 15 cm.) and over the whole of this length the cellular structure plus the absorbing abilities of the cell are preserved.

When water is removed from the sphagnum plant the hyaline cells are emptied, and the plant will lose a part of its colour. The dissimilar kinds of sphagnum have before drying various colours (green, red and dark beige), and on drying the colour will be bleached, and the dried plants will often appear with a white/yellowish colour. The sphagnum plant will also get a brittle consistency, and these properties are employed in order to establish that the plant has such a low water content that it will function effectively as a sorption means. It is presumed that the capacity of the sphagnum plant for absorption is related to the cell volume of the hyaline cells, and that the maximum absorption is reached when all the water in the hyaline cells of the sphagnum plant is replaced by air. Thus the degree of drying determines the absorption ability. On further drying of the plant, beyond the change of colour and consistency, the hydrophobicity and buoyancy of the plant will also increase.

The degree of drying can thus be varied so that the desired product is obtained, but in most cases drying to the colour/consistency change will be sufficient.

The sphagnum plant can be dried in various ways. For example it can be placed in a layer (10-15 cm.) and air dried at the ambient temperature, or it can be dried by supplying energy, for example in a grain drier. By air drying at the ambient temperature drying will take about 1-3 days, usually about 2 days.

In one embodiment the harvested sphagnum plant is packed directly in bags of a net material, that is to say a meshed material, and drying will be undertaken through this net material. Drying of Sphagnum packed in such bags will take about 1-3 months, depending upon the air humidity and temperature.

In all the experiments described below (Examples 2-9), Sphagnum plants are used which are largely whole, and all experiments are conducted at the ambient temperature.

### Example 2 (comparative)

A bowl is filled with a litre of water. To the water is added 1 dl. of used, black motor oil. The mixture is mixed with a mix-master for about 2 minutes, and the mixture becomes plain black. The mixture is more viscous than water. We now have a mixture which is not phase separated, that is to say a dispersion or an emulsion. 1-2 dl. of dried sphagnum plant are added. After 3-5 seconds the water is clear, and the sphagnum plant is coloured black by oil.

The plants can be readily collected and by pressing the plants together by hand, that is to say twisting the plants, water can be pressed out of the plants. Oil does not escape from the plant by this pressing process.

The sphagnum plant now includes all the oil (1 dl.) and small amounts of water. On drying the plants for 1-3 days, the sphagnum plant is permitted to ignite, and the plants burn in about 30-60 minutes.

In order to check that dry Sphagnum absorbs oil better than non-dried Sphagnum an experiment corresponding to the experiment described above was carried out but now with the addition of 1-2 dl, of non- dried Sphagnum. By visual examination of the mixture it is not possible to see whether the plant has absorbed any oil. The water does not become clear.

### Example 3 (comparative)

A litre of water and 1 dl. of black, used motor oil (the same as above) is mixed with shaking/whisking for about 2 minutes. The mixture becomes plain black, and more viscous than water. The mixture is filtered immediately through a funnel which contains a filter consisting of 1-2 dl. dried sphagnum plants. The oil remains in the filter. Clear water (about 1 litre) flows through the filter.

### Example 4 (comparative)

Corresponding to Example 2, but the water is exchanged for 1 litre of salt water (40g. NaCl per litre). The result is as in Example 1, that is to say that the oil remains in the filter of sphagnum plants, and that clear water flows through.

### Example 5 (comparative)

A thin oil slick of 1 dl. black, used motor oil floats on the surface of 30 dl. of water. 1-2 dl. of dried sphagnum plants are sprinkled on the surface, on top of the oil slick. The sphagnum plants float on the top, and after about 20 seconds the plant has drawn all the oil to itself. The plant material still floats. The material is lifted off with a pin, and the water which remains behind in the bowl is completely clear, and it is impossible to observe visually that the water is contaminated with oil.

### Example 6 (comparative)

6 dl. of water in a crude oil emulsion, so-called "chocolate mousse" collected from crude oil contamination in the North Sea, is poured over into a bowl. The emulsion is very viscous. 3 dl. of sphagnum plants are added and the mass becomes manageable, in that it gets a doughy consistency. An additional 3 dl. of sphagnum plants are added. By pressing the material together, by manual force, about 1 dl. of water can be wrung out. The consistency of the sphagnum plants is now to be compared with the consistency of moist grass or moss.

### Example 7 (comparative)

2 dl. of crude oil emulsion, so-called "chocolate mousse" collected from crude oil contamination in the North Sea, is poured over into a dry bowl. The oil emulsion remains hanging fast to the surface of the bowl after water is added also, and the water lays as a layer over the oil emulsion. By rubbing the sphagnum plants (3 dl.) directly against the oil, the oil is removed without the water being soiled by oil. The major portion of the oil is absorbed in the plant structure, but some is also adsorbed to the surface.

### Example 8

Sphagnum plants have the ability to absorb both hydrophillic and hydrophobic solvents. At the same time the plant must be partially dried so that it can absorb additional solution. This involves the plant having to be partially dry as it comes into contact with oil. In order to make the plant water-rejecting it can be impregnated with a film of different types of hydrophobic solvents which are repelling water, but which naturally are permeable to hydrophobic mediums.

Paraffin wax was dissolved at 20°C in a non-polar solvent, such as isopropanol, 2-propanol, white spirit, diesel or paraffin. The impregnating medium is sprayed on the partially dry sphagnum plants for the plant surface to become wet. The solvent in the impregnating medium evaporates off, and the wax material remains lying as a protective film on the surface of the plant.

The sphagnum plants are submerged in a tub with water, and they do not absorb water. The plants remain dry. The plants which are not impregnated will absorb water immediately. Impregnated plants submerged in oil have complete absorption ability.

### Example 9

In this experiment the ability of the sphagnum plants to absorb different types of oil is investigated. The experiment was conducted by laying 1-2 dl. of sphagnum plants in a bowl with respectively diesel oil, motor oil and disintegrated crude oil for 15 minutes. The sphagnum plants were collected, and allowed to drain off in 30 seconds. The oil-saturated absorbent is weighed and is corrected for starting weight.

For diesel oil the plant has absorbed 7.7 times its own dry weight (17 grams of sphagnum plants absorb 131 grams of oil), for motor oil 15.6 times, and for disintegrated oil 26.4 times its own weight. For comparison it can be mentioned that pine bark, available under the trade mark "ZUGOL", absorbs, according to the producer, for diesel 2.36 times its own weight, for crude oil 3.07 times, and for disintegrated crude oil 4.99 times its own weight.

The above Examples have shown what excellent properties dried sphagnum plants have in connection with sorption of hydrophobic solvents, such as oil.

It is clearly evident from the Examples that the Sphagnum plant absorbs hydrophobic solvents, in addition to being able to absorb hydrophillic solvents, such as water. It is surprising that the plant has a preference for the absorption of oil over water. It is also surprising that after the plant has absorbed a mixture of water and oil, the water can be pressed out of the plants, while the oil remains in the plant. In addition to clearing oil spills, the plants can thus also function as a means which separates a hydrophillic solution from a hydrophobic solution, such as for example water from oil.

As mentioned above there are large environmental problems connected with the use of chemical dispersing means, since most of these exhibit a toxic effect on animal and plant life. This problem is solved by the use of the present invention, which utilises a biological material which is not toxic and in addition readily allows itself to decompose, either by combustion or composting.

In relation to the use of for example peat as an adsorption medium the use of the material according to the invention which contains largely whole plants is to be preferred because the plant material can be readily collected after use. It can for example be collected with a net or a grip shovel.

In an embodiment according to the invention is sphagnum plants packed in bags of a net material. The plant portions are of such a size that they will not escape through the openings in the bags, while water/oil will penetrate the openings of the net material and be in direct contact with the plant material. The net material can have a mesh width of from 0.5-10 cm., preferably 1-3 cm.. All types of net material can be used, but if the sphagnum plants are to be composted after use it is favourable to use a net material which is biologically degradable, such as for example jute material.

A second embodiment is packing the sphagnum plants in a net material formed as a quilt. That is to say that the plant material covers a larger surface and that the quilt can have a thickness of from 5-30 cm., preferably 10-15 cm.

Still another embodiment is to form the net material as a sausage. The material according to the invention can thus be used as a boom, either separately or in combination with a conventional oil boom. Sphagnum plants packed in sausage form function inter alia admirably as a collecting material by collecting oil in the vicinity of fish breeding plants. Here it has been found that conventional oil booms function poorly because these have little ability to retain the oil, which often will "bleed" from such a boom.

In principle by packing in a net material the sphagnum plants can receive the form which is best adapted to the individual situation.

In all the embodiments which are described above sphagnum plants can be used which either are impregnated or not.

The embodiments can also include mixtures of several different kinds of the sphagnum family, plus mixtures of Sphagnum together with other conventional sorption mediums.

In the Examples it is shown that the sphagnum plants can be used on sheets of oil which float on top of the water, on dispersions and emulsions of oil and water, and also on aggregated oil below a phase of water. It is further shown (the experiments are not included in the Example portion) that the sorption material according to the invention can be used directly on an oil contamination. The material can thus be used for example in workshops where oil spills on floors is a big problem. By rubbing the sorption material directly on the oil spill, this can thus be removed. It is also shown that the material according to the invention effectively removes oil on for example hands by rubbing the material between the hands. In the course of a short time (15-30 seconds) all the oil will be able to be removed from hands which are dipped in oil.

It is also assumed that sphagnum plants can be used for cleaning birds and sea animals which have been in contact with an oil spill. These are placed in a container with sphagnum plants which will absorb the oil. The empty hyaline cells of the sphagnum plants will act as insulation, and thus give a protection against heat loss.

As mentioned above the Sphagnum family consists of about 40 kinds, and all will be able to be used according to the invention as sorption mediums. The capacity and the kinetics in connection with the sorption process will vary from kind to kind. By the fact that the sorption takes place through the surface of the plant the kinds having a large surface, or that portion of the plant which has the largest surface, will most rapidly absorb the hydrophobic solvents. The absorption capacity is however related to the size of the hyaline cells.

The experiments which are performed in connection with the invention have used dissimilar types of oils as examples of what can be absorbed, but it is expected that also other compounds, such as lipids, environmental poisons such as PCB and the like will also be absorbed in the plants.

The uptake mechanism is not known, but it is believed that passive diffusion over the cell wall, when the cells are partially dried out, leads both hydrophobic and hydrophillic compounds into the hyaline cells. Probably the diffusion is selective, and the experiments show that hydrophobic substances are admitted quicker into the hyaline cells. Alternatively the intake process can be non-selective, but that water escapes again more rapidly.

## Claims

1. Sorption medium comprising the plant family Sphagnum for sorption of hydrophobic compounds wherein the sphagnum plant is partially dried, **characterised in that** the sphagnum plant is whole, that is to say with an intact plant structure, and impregnated with a water-repelling, hydrophobic material.

2. Use of a sorption medium comprising partially dried sphagnum plants for sorption of hydrophobic compounds, wherein the sphagnum plant is whole, that is to say with an intact plant structure, and is impregnated with a water-repelling, hydrophobic material.

3. Use of a sorption medium in accordance with claim 2, wherein the medium is enclosed by a net material.

4. Use of a sorption medium in accordance with claim 3, wherein the net material is formed as a sack, bag or quilt.

5. Use of a sorption medium an accordance with claim 3 wherein the net material has a sausage-like form, adapted for use in connection with an oil boom.

6. Use of a medium in accordance with one of the claims 2-5, wherein the hydrophobic compounds are present as a pollution in a hydrophilic solution.

7. Use in accordance with claim 6, wherein the solution is water, which is polluted with hydrophobic compounds, such as oil.

8. Use in accordance with claim 7, wherein the hydrophobic compounds lie as a film on top of the water.

9. Use in accordance with claim 7, wherein the hydrophobic compounds are dispersed in the water, or exist as an oil/water, or water/oil emulsion.

10. Use in accordance with claim 7, wherein the hydrophobic compounds are aggregated and phase-separated from the water.

11. Use in accordance with one of the claims 2-5, wherein the hydrophobic compounds are in contact with, or adhered to a solid surface, and wherein the medium is employed directly on the hydrophobic compounds, preferably by rubbing the medium against the surface, in order to remove said compounds from said surfaces.

12. Use in accordance with one of the claims 2-5, wherein the sorption medium is used as a filter in a funnel to cleans a aqueous solution polluted with hydrophobic compounds.

13. Process for producing a sorption medium comprising sphagnum plant for sorption of hydrophobic compounds, **characterised in that** the uppermost portion, preferably about 15 cm, of the sphagnum plant is harvested in a manner suitable to keep the sphagnum plant whole, that is to say with an intact plan structure, i.e. without a grinding step, and thereafter is dried until the colour of said plant has become white to white yellow, and the plant has got a brittle consistency, and the dried sphagnum plant is showered/sprayed with a water-repelling, hydrophobic material, such as for example paraffin wax dissolved in a hydrophobic solvent, such as isopropanol, 2-propanol, white spirit, diesel or paraffin.

## Patentansprüche

1. Sorptionsmittel mit der Pflanzenfamilie Sphagnum, für eine Sorption von hydrophoben Massen, wobei die Sphagnumpflanze teilweise getrocknet ist,
**dadurch gekennzeichnet,**
**dass** die Sphagnum Pflanze ganz, das heißt mit einer intakten Pflanzenstruktur, ist und mit einem wasserabweisenden hydrophoben Material imprägniert ist.

2. Verwendung eines Sorptionsmittels mit teilweise getrockneten Sphagnumpflanzen für eine Sorption von hydrophoben Massen, wobei die Sphagnumpflanze ganz, das heißt mit einer intakten Pflanzenstruktur, ist und mit einem wasserabweisenden hydrophoben Material imprägniert ist.

3. Verwendung eines Sorptionsmittels nach Anspruch 2, wobei das Mittel durch ein Netzmaterial umschlossen ist.

4. Verwendung eines Sorptionsmittels nach Anspruch 3, wobei das Netzmaterial wie ein Sack, ein Beutel oder eine Steppdecke geformt ist.

5. Verwendung eines Sorptionsmittels nach Anspruch 3, wobei das Netzmaterial
eine wurstähnliche Form hat, die zur Verwendung in Verbindung mit einem Ölstoppschlauch geeignet ist.

6. Verwendung eines Mittels nach einem der Ansprüche 2 bis 5, wobei die hydrophoben Massen als eine Verschmutzung in einer hydrophilen Lösung vorhanden sind.

7. Verwendung nach Anspruch 6, wobei die Lösung Wasser ist, das mit hydrophoben Massen, wie Öl, verschmutzt ist.

8. Verwendung nach Anspruch 7, wobei die hydrophoben Massen als ein Film auf dem Wasser liegen.

9. Verwendung nach Anspruch 7, wobei die hydrophoben Massen in dem Wasser dispersiert sind oder als eine Öl/Wasser- oder Wasser/Öl-Emulsion existieren.

10. Verwendung nach Anspruch 7, wobei die hydrophoben Massen angehäuft und phasengetrennt von dem Wasser sind.

11. Verwendung nach einem der Ansprüche 2 bis 5, wobei die hydrophoben Massen in Kontakt mit einer festen Oberfläche sind oder daran anhaftend sind und wobei das Mittel direkt an den hydrophoben Massen angewendet wird, vorzugsweise durch Reiben des Mittels gegen die Oberfläche, um die Massen von den Oberflächen zu entfernen.

12. Verwendung nach einem der Ansprüche 2 bis 5, wobei das Sorptionsmittel als ein Filter in einem Trichter verwendet wird, um eine mit hydrophoben Massen verschmutzte wässrige Lösung zu reinigen.

13. Verfahren zum Herstellen eines Sorptionsmittels mit Sphagnumpflanze für eine Sorption von hydrophoben Massen,
**dadurch gekennzeichnet,**
**dass** der oberste Teil, vorzugsweise etwa 15 cm, der Sphagnumpflanze geerntet wird in einer Weise, die zum Erhalt der ganzen Sphagnumpflanze, das heißt mit einer intakten Pflanzenstruktur, geeignet ist, d.h. ohne einen Mahlschritt, und danach getrocknet wird, bis die Farbe der Pflanze weiß oder weißgelb geworden ist und die Pflanze eine brüchige Konsistenz bekommen hat und dass die getrocknete Sphagnumpflanze mit einem wasserabweisenden hydrophoben Material, wie zum Beispiel Paraffin-Wachs, das in einer hydrophoben Lösung, wie Isopropanol, 2-Propanol, Lackbenzin, Diesel oder Paraffin gelöst ist, geduscht/besprüht wird.

## Revendications

1. Moyen d'absorption comprenant la famille de plantes sphaigne, destiné à l'absorption de composés hydrophobes, où la plante sphaigne est partiellement séchée, **caractérisé en ce que** la plante sphaigne est entière, c'est-à-dire a une structure végétale intacte, et est imprégnée d'une substance hydrophobe repoussant l'eau.

2. Utilisation d'un moyen d'absorption comprenant des plantes sphaignes partiellement séchées pour l'absorption de composés hydrophobes, où la plante sphaigne est entière, c'est-à-dire a une structure végétale intacte, et est imprégnée d'un matériau hydrophobe, repoussant l'eau.

3. Utilisation d'un moyen d'absorption selon la revendication 2, où le moyen est enfermé dans un matériau type filet.

4. Utilisation d'un moyen d'absorption selon la revendication 3, où le matériau de type filet a la forme d'un sac, d'une poche ou d'un édredon.

5. Utilisation d'un moyen d'absorption selon la revendication 3, où le matériau de type filet a une forme de saucisse, conçue pour être utilisée en connexion avec un tuyau de retenue d'huile,

6. Utilisation d'un moyen selon l'une des revendications 2 à 5, où les composés hydrophobes sont présents en tant que pollution dans une solution hydrophile.

7. Utilisation selon la revendication 6, où la solution est de l'eau polluée par des composés hydrophobes, tels que l'huile.

8. Utilisation selon la revendication 7, où les composés hydrophobes reposent sous la forme de pellicule à la surface de l'eau.

9. Utilisation selon la revendication 7, où les composés hydrophobes sont dispersés dans l'eau ou existent sous forme d'émulsion huile/eau ou eau/huile.

10. Utilisation selon la revendication 7, où les composés hydrophobes sont agrégés et séparés en phase de l'eau.

11. Utilisation selon l'une quelconque des revendications 2 à 5, où les composés hydrophobes sont en contact avec une surface solide ou y adhèrent, et où le moyen est employé directement sur les composés hydrophobes, de préférence par frottement du moyen contre la surface, afin de retirer lesdits composés desdites surfaces.

12. Utilisation selon l'une quelconque des revendications 2 à 5, où le moyen d'absorption est utilisé sous forme de filtre dans un entonnoir pour nettoyer une solution aqueuse polluée par des composés hydrophobes.

13. Procédé de production d'un moyen d'absorption comprenant la plante sphaigne destiné à l'absorption de composés hydrophobes, **caractérisé en ce que** la portion supérieure, de préférence d'environ 15 cm, de la plante sphaigne, est récoltée d'une façon permettant de conserver la plante sphaigne entière, c'est-à-dire ayant une structure végétale intacte, c'est-à-dire sans étape de broyage, et qu'elle est ensuite séchée jusqu'à ce que la couleur de ladite plante soit devenue blanc à blanc jaunâtre et que la plante a une consistence friable, et que la plante sphaigne séchée est arrosée/pulvérisée avec une substance hydrophobe repoussant l'eau, telle que par exemple une cire de paraffine dissoute dans un solvant hydrophobe tel que l'isopropanol, le 2-propanol, l'essence blanche, le diésel ou la paraffine.
